# EUROPÄISCHE PATENTSCHRIFT

(11) **EP 1 223 561 B1**
(45) Veröffentlichungstag und Bekanntmachung des Hinweises auf die Patenterteilung: **11.08.2010**
(21) Anmeldenummer: 02000599.7
(22) Anmeldetag: 10.01.2002
(51) Int. Cl.: G07C 9/00, G07C 1/10

(54) **Verfahren und Anordnung zur Erfassung der Anwesenheit von Personen**
Method and arrangement for detecting the presence of persons
Procédé et dispositif pour détecter la présence de personnes

(30) Priorität: 10.01.2001 DE 10100808
(43) Veröffentlichungstag der Anmeldung: 17.07.2002
(73) Patentinhaber: Tenovis GmbH & Co. KG, 60326 Frankfurt (DE)
(72) Erfinder: Kozlik, Horst, 85653 Haying (DE)
(74) Vertreter: Tergau & Pohl Patentanwälte

(56) Entgegenhaltungen:
- DE-A1- 19 711 907
- US-A- 5 502 758
- "Digital Enhanced Cordless Telecommunications (DECT); Common Interface (CI); Part 5: Network (NWK) layer; Final draft EN 300 175-5" ETSI STANDARDS, EUROPEAN TELECOMMUNICATIONS STANDARDS INSTITUTE, SOPHIA-ANTIPO, FR, Bd. DECT, Nr. V142, März 1999 (1999-03), XP014000637 ISSN: 0000-0001
- "Digital Enhanced Cordless Telecommunications (DECT); Broadband Integrated Services Digital Network (B-ISDN); DECT/B-ISDN interworking; TS 101 679" ETSI STANDARDS, EUROPEAN TELECOMMUNICATIONS STANDARDS INSTITUTE, SOPHIA-ANTIPO, FR, Bd. DECT, Nr. V111, Juli 1999 (1999-07), XP014006537 ISSN: 0000-0001
- GLEINIG U ET AL: "CSTA - COMPUTER SUPPORTED TELECOMMUNICATIONS APPLICATIONS" NACHRICHTENTECHNIK ELEKTRONIK, VEB VERLAG TECHNIK. BERLIN, DE, Bd. 42, Nr. 3, 1. Mai 1992 (1992-05-01), Seiten 96-98, XP000305584 ISSN: 0323-4657

## Beschreibung

Die Erfindung betrifft ein Verfahren zur Erfassung der Anwesenheit von Personen in einem vorbestimmten Raumbereich über ein Telekommunikationsnetz sowie eine Anordnung zur Durchführung dieses Verfahrens.

Die Anwesenheitserfassung ist ein in praktisch allen Bereichen der Wirtschaft sowie in der öffentlichen Verwaltung, in medizinischen und sozialen Einrichtungen und den verschiedenen Organisationen bestehendes Anliegen. Von der Anwesenheit bestimmter Mitarbeiter hängt es ab, ob bestimmte Leistungen des Wirtschaftsunternehmens oder der anderen Einrichtung zu einem bestimmten Zeitpunkt erbracht werden können, welcher Mitarbeiter aktuell welche Aufgaben zu lösen hat und welche Maßnahmen bei externen Anforderungen zu treffen sind. Schließlich bildet die Anwesenheitserfassung die Grundlage für die Arbeitszeiterfassung des einzelnen Mitarbeiters, die wiederum auch in der modernen Arbeitswelt von wesentlicher Bedeutung für die Vergütung seiner Arbeitsleistung ist.

Systeme zur Erfassung der Anwesenheit von Mitarbeitern in einem Unternehmen oder einer Einrichtung sind seit langem in großer Vielfalt bekannt - insbesondere in Form der althergebrachten mechanischen oder neueren elektronischen "Stechkartensysteme". Deren Funktion beruht darauf, daß der im Besitz einer individuellen Berechtigungskarte befindliche Mitarbeiter ein in einem Zugangsbereich des Unternehmens oder der Einrichtung befindliches Erfassungsgerät passiert und seine Karte dort markieren bzw. lesen läßt. Bei modernen Systemen dieser Art, die Karten mit Transponder nutzen, erfolgt die Anwesenheitserfassung ohne spezielle Handhabung durch den Mitarbeiter selbsttätig beim Vorübergehen an dem Erfassungsgerät. (Auf analoge Weise läßt sich übrigens mit solchen Systemen der Besucherverkehr überwachen, wenn an jeden Besucher eine entsprechende Berechtigungskarte ausgegeben wird.)

Es sind auch Anwesenheitserfassungssysteme bekannt, bei denen sich die zu erfassenden Personen über ein Telekommunikationsnetz aktiv bei einer Zentrale melden, wo ihre Meldung registriert wird. Derartige Systeme, die auch die Feststellung der Verfügbarkeit von Mitarbeitern für bestimmte Aufgaben (unabhängig von ihrem aktuellen konkreten Aufenthaltsort) ermöglichen, sind beispielsweise bei Taxiunternehmen und anderen Verkehrsbetrieben sowie Kliniken seit längerem gebräuchlich. Hier werden auch drahtlose Telekommunikationssysteme genutzt. Es gibt aber auch entsprechende Lösungen für herkömmliche leitungsgebundene private Anlagen, wobei jeder Mitarbeiter sich bei Erreichen des Arbeitsplatzes von seinem Anschluß bzw. Endgerät aus bei der Vermittlungsstelle meldet.

Umgekehrt sind auch Lösungen bekannt, bei denen die KOMMT-/GEHT-Meldung eines Mitarbeiters bei einem Endgerät einer Personalzeit-Erfassungsanlage ein Signal für eine Vermittlungsanlage erzeugt, welches in einem Arbeitsspeicher derselben abgelegt wird, der dem der betreffenden Person zugewiesenen Anschlußorgan zugeordnet ist. Bei einer solchen, in der DE 38 24 190 C2 der Rechtsvorgängerin der Anmelderin beschriebenen Lösung läßt sich dadurch am entsprechenden Anschluß eine Information darüber bereitstellen, ob der gewünschte Teilnehmer für eine Gesprächsverbindung zur Verfügung steht oder nicht. In dieser Druckschrift wird auch erwähnt, daß auch Fernsprechapparate selbst zur direkten Eingabe von Zeitdaten benutzt werden können und insoweit dieselbe Funktion wie ein an die Personalzeit-Erfassungsanlage angeschlossenes Endgerät haben können.

Aus der EP 0 664 061 B1 ist ein System zum Registrieren der "Anwesenheit" von Schülern oder Studenten bei einer von einem zentralen Rechner aus gesteuerten Fern-Lehrveranstaltung bekannt. Die Verbindung zwischen im Besitz der Schüler bzw. Studenten befindlichen Endgeräten (z. B. Handheld-PCs) wird durch ein Funknetz oder eine Modem-Verbindung oder ein Breitbandnetz hergestellt. Das System soll mit minimalem Bedienaufwand seitens der Lernenden auskommen, erfordert aber gleichwohl eine aktive Anmeldung beim Lehrer.

Diese bekannten Lösungen sind insofern noch in gewissem Sinne nachteilig, als sie ein eigenständiges System speziell zur Anwesenheitserfassung - ohne allgemeine Kommunikationsfunktion - darstellen und/oder die Anwesenheitserfassung eine spezielle, durch die betreffende Person aktiv abzugebende Meldung erfordert.

Aus der DE 197 11 907 A1 ist ein System zur Erfassung der Anwesenheit von Personen bekannt, bei dem zwischen einem DECT-Mobilteil und einem DECT-Festteil Anmeldesignale bei Eintritt des Mobilteils in dem Empfangbereich des Festteils und Abmeldesignale beim Austritt des Mobilteils aus dem Empfangsbereich des Festteils übermittelt werden.

Die DECT-Norm, ETSI EN 300 175-5 v1.4.2 (endgültiger Entwurf, 1999-03), beschreibt eine periodische Anwesenheitsmeldung eines DECT-Mobilteils, wobei diese Meldung vom DECT-Mobilteil initiiert wird.

Der Erfindung liegt die Aufgabe zugrunde, ein in seiner Erstellung und Handhabung besonders einfaches Verfahren zur Anwesenheitserfassung sowie eine entsprechende Anordnung anzugeben.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 9 gelöst.

Die Erfindung schließt den wesentlichen Gedanken ein, ein Anwesenheitssignal durch ein Mobilfunksystem nach dem DECT-Standard, wie es zunehmend von Unternehmen und anderen Einrichtungen als private Telefonanlage genutzt wird, zu erzeugen. Hierbei wird das Verweilen des einer bestimmten Person zugewiesenen Mobilteils im eingeschalteten Zustand innerhalb der Reichweite des zentralen Festteiles als Anwesenheit seines Nutzers interpretiert.

Sie schließt weiter den Gedanken ein, den Eintritt des Mobilteils in den Funksende-/-Empfangsbereich, innerhalb dessen ein Signalaustausch mit dem Festteil möglich ist, oder seine Einschaltung innerhalb dieses Bereiches als initiales Anwesenheitssignal zu interpretieren. Schließlich umfaßt die Erfindung den Gedanken, nach Erzeugung dieses (initialen) Anwesenheitssignals Verifizierungen der weiteren Anwesenheit des Nutzers (Mitarbeiters bzw. Berechtigten) durch eigens zu diesem Zweck initiierte Signalaustauschvorgänge vorzunehmen.

Die Ausführung der nachfolgenden Signalaustauschvorgänge zur Verifizierung der Anwesenheit geht bevorzugt als ein Polling vom Festteil aus. Eine periodische Durchführung in angemessenen Zeitabständen (die vom Anwendungsfall des Systems abhängen werden, typischerweise aber 15 min oder weniger, insbesondere 5 min oder weniger, betragen werden) ist aus derzeitiger Sicht am einfachsten; grundsätzlich ist aber auch eine Verifizierung in unregelmäßigen Zeitabständen möglich, die durch einen Zufallsgenerator vorgegeben werden.

Um den Einfluß kurzfristiger Störungen auszuschalten, erfolgt die Feststellung von Abwesenheit bzw. das Austragen aus einer Anwesenheitsliste sinnvollerweise erst dann, wenn mehrere Verifizierungen hintereinander ein negatives Ergebnis geliefert haben, d. h. nachhaltig kein Signalaustausch zwischen Festteil und Mobilteil mehr möglich ist.

Zweckmäßigerweise kann bei Vorliegen eines negativen Verifizierungsergebnisses ein spezielles Prüfprogramm gestartet werden, welches in einem entsprechenden Speicher bei der Vermittlungsstelle bzw. dem Festteil oder einem zugeordneten Steuerrechner gespeichert ist und insbesondere mehrere Polling-Vorgänge in kurzen Abständen hintereinander umfaßt. Für die einzelnen Prüfungsschritte wird in einem entsprechenden Speicher das jeweilige Ergebnis (positiv/negativ) gespeichert und nach Abarbeitung des Prüfungsprogramms im Ergebnis einer vorbestimmten Auswertung entschieden, ob das Anwesenheitssignal gelöscht und damit die Abwesenheit des Nutzers des entsprechenden Mobilteils festgehalten wird.

Das auf die oben beschriebene Weise erzeugte (bzw. wieder gelöschte) Anwesenheitssignal kann zum einen - durch eine Auswertung der Zeitdauer seines Vorliegens - für eine Arbeitszeiterfassung genutzt werden. Weiterhin kann es in vorteilhafter Weise zur Steuerung von Funktionen der Telekommunikationsanlage, insbesondere einer automatischen Rufum- bzw. -weiterleitung innerhalb der Anlage oder auch nach außen, genutzt werden. Es versteht sich, daß hierbei eine aufgrund der Löschung eines Anwesenheitssignals initiierte Rufumleitung bei Rückkehr des entsprechenden Mitarbeiters (und erneuter Erzeugung "seines" Anwesenheitssignals) wieder selbsttätig zurückgenommen werden kann.

Zudem sind bestimmte arbeitsorganisatorische Maßnahmen im Unternehmen bzw. der Einrichtung auf der Basis des Anwesenheitssignals möglich, die auf das Tätigkeitsprofil der Einrichtung sowie die speziellen Aufgaben des einzelnen Mitarbeiters zugeschnitten sind. So lassen sich mit dem Anwesenheitssignal die Optimierung der Aufgabenverteilung zwischen Vertriebs- oder Kundendienstmitarbeitern ebenso realisieren wie die Beschleunigung von Ausliefer- oder Warenannahmevorgängen. Auch eine Optimierung von Sekretariatsprozessen ist möglich, wenn der Sekretärin oder den Sekretärinnen bzw. Büromitarbeitern die Anwesenheit oder Abwesenheit ihres oder ihrer Chefs auch dann zuverlässig bekannt ist, wenn dieser/diese im Betrieb unterwegs ist/sind.

Die Steuerung bzw. Realisierung der erwähnten Anwendungen erfolgt zweckmäßigerweise über einen PC oder Server, der mit der Vermittlungsstelle bzw. dem Festteil (der Basisstation) verbunden ist. Die Verbindung ist wahlweise drahtlos oder leitungsgebunden, wobei aus derzeitiger Sicht die Anbindung über eine Leitung eines digitalen Festnetzes - und zwar hier über den B-Kanal (S₀) - als bevorzugt erscheint. Bei der Kommunikation TK-anlage - PC/Server erfolgt eine geeignete Formatanpassung, speziell zwischen dem CSTA(Computer Supported Telecommunications Application)-Protokoll und dem internen privaten Protokoll der TK-Anlage.

Die oben erwähnten Verfahrensaspekte finden ihre Entsprechung in Hard- oder Softwarekomponenten einer zur Durchführung des Verfahrens geeigneten Anordnung. Auf diese Funktionskomponenten wird in den Vorrichtungsansprüchen im einzelnen hingewiesen, so daß auf eine Wiederholung hier verzichtet werden kann.

Im übrigen ergeben sich Vorteile und Zweckmäßigkeiten der Erfindung aus den abhängigen Ansprüchen sowie der nachfolgenden Beschreibung bevorzugter Ausführungsbeispiele und -aspekte der Erfindung anhand der Figuren. Von diesen zeigen:
- Fig. 1: ein Funktions-Blockschaltbild einer Ausführungsform der erfindungsgemäßen Anordnung,
- Fig. 2: ein Ablaufschema der Signalisierungen im Rahmen einer Anmeldung und
- Fig. 3: ein Ablaufschema der Signalisierungen im Rahmen eines Verifizierungsvorganges.

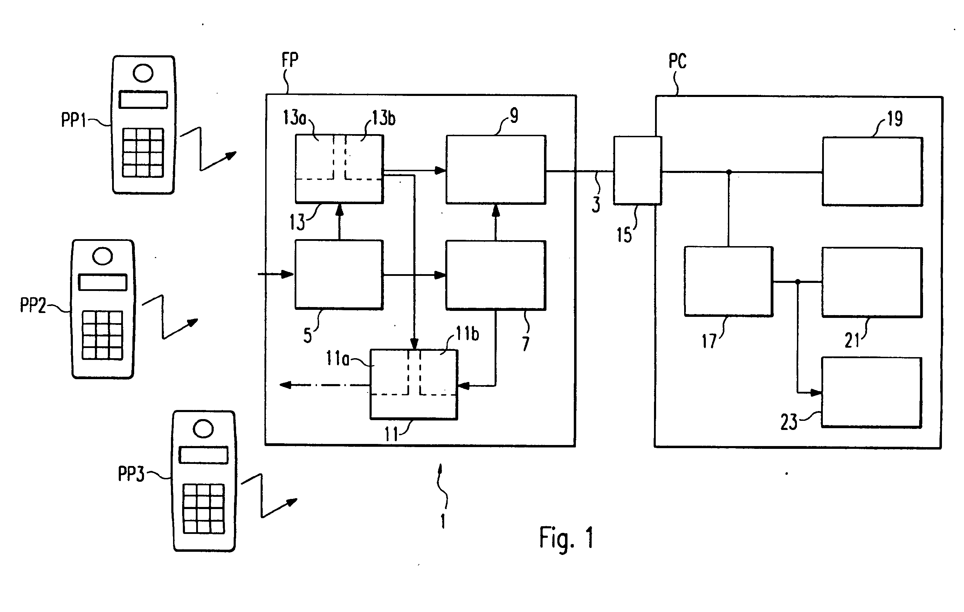

Fig. 1 zeigt eine Anordnung 1 zur Anwesenheitserfassung, deren wesentliche Komponenten mehrere Mobilteile PP1 bis PP3 von Mitarbeitern eines Unternehmens, ein zugleich als Vermittlung fungierendes, nach dem DECT-Standard mit den Mobilteilen kommunizierendes Festteil (Basisstation) FP und ein über eine Telefonleitung 3 eines IDSN-Festnetzes mit der Basisstation FP verbundene Verarbeitungseinheit PC sind.

Hinsichtlich der Kommunikation zwischen den Mobilteilen PP1 bis PP3 und dem Festteil FP stellt die Anordnung eine herkömmliche private TK-Anlage nach DECT-Standard dar, die dem Fachmann bekannt ist und daher hier keiner näheren Erläuterung bedarf. Der Aufbau des Festteils bzw. der Basisstation FP ist hingegen zur Realisierung des erfindungsgemäßen Verfahrens um bestimmte (hard- bzw. softwaremäßig realisierte) Funktionskomponenten erweitert, die nachfolgend beschrieben werden. Die Verarbeitungseinheit PC wird in der Praxis auf einem Personalcomputer oder Server im wesentlichen softwaremäßig implementiert sein. Auch diesbezüglich werden nachfolgend nur die für die Erläuterung der Erfindung wesentlichen Funktionskomponenten erläutert.

Das Festteil FP weist (in an sich bekannter Weise) eine Empfangssignal-Verarbeitungsstufe 5 auf, die die beim Einschalten der Mobilteile bzw. deren Eintritt in den Kommunikationsbereich mit dem Festteil empfangenen Signale erfaßt und verarbeitet. Die Empfangssignal-Verarbeitungsstufe 5 ist ausgangsseitig mit einer Anwesenheitssignal-Erzeugungseinrichtung 7 verbunden, die aus den vorverarbeiteten Signalen ein Anwesenheitssignal ableitet. Diese ist ihrerseits ausgangsseitig einerseits mit einer Anwesenheitssignal-Schaltstufe 9 und andererseits mit einem Steuereingang einer Ablaufsteuerung 11 zur Steuerung nachfolgender Verifizierungsvorgänge verbunden.

Die Empfangssignal-Verarbeitungsstufe 5 ist desweiteren mit einer Verifizierungs-Auswertungseinrichtung 13 verbunden, welche ihrerseits mit einem Steuereingang der Anwesenheitssignal-Schaltstufe 9 verbunden ist. Die Ablaufsteuerung 11 enthält einen Prüfprogrammspeicher 11a, in dem Abläufe von Signalaustauschvorgängen mit den Mobilteilen zur Verifizierung der Anwesenheit des jeweiligen Nutzers gespeichert sind, sowie einen Prüfprogramm-Taktgeber 11b verbunden.

Die Verifizierungs-Auswertungseinrichtung 13 umfaßt einen Prüfergebnisspeicher 13a zur Speicherung von das Funktionieren oder Nicht-Funktionieren eines Signalaustausch mit jeweils einem Mobilteil repräsentierenden Daten und eine Entscheidungseinrichtung 13b zur Bewertung dieser Daten zur Feststellung des Funktionierens oder Nicht-Funktionierens des Signalaustausches und zur Ausgabe eines entsprechenden Steuersignals an die Anwesenheitssignal-Schaltstufe 9 sowie parallel an die Ablaufsteuerung 11.

Bei Feststellung eines nachhaltigen Nicht-Funktionierens der Verbindung zwischen dem Festteil und einem Mobilteil bei Ausführung eines Verifizierungsschrittes (siehe weiter unten) gibt die Auswertungseinrichtung 13 an die Anwesenheitssignal-Schaltstufe 9 ein als Löschsignal für das bis dahin anliegende Anwesenheitssignal wirkendes Steuersignal aus. Das einmalige Nicht-Funktionieren des Signalaustausches bei einem Verifizierungsschritt führt hingegen (abgesehen von der Speicherung der zugehörigen Daten im Prüfergebnisspeicher 13a) zur Ausgabe eines Steuersignals an die Ablaufsteuerung. Diese lädt im Ansprechen hierauf ein spezielles Prüfprogramm für diesen Fall aus dem Prüfprogrammspeicher 11a und beginnt es - unter zeitlicher Steuerung durch den Prüfprogramm-Taktgeber 11b - auszuführen.

Die den einzelnen Prüfschritten zugeordneten Signale aus der Empfangssignal-Verarbeitungsstufe 5 werden in weiteren Speicherbereichen des Prüfergebnisspeichers 13a gespeichert und nach Abschluß des speziellen Prüfprogramms zusammen der Entscheidungseinrichtung 13b zugeführt, in der das Gesamtergebnis des aufgrund des vorläufigen negativen Verifizierungsergebnisses eingeleiteten Prüfprogramms festgestellt wird. Dieses Ergebnis bestimmt, ob das besagte Steuersignal zur Löschung des Anwesenheitssignals an die Anwesenheitssignal-Schaltstufe 9 ausgegeben wird oder nicht. Im letzteren Falle bleibt das Anwesenheitssignal bestehen und die Ablaufsteuerung 11 kehrt in den bei aktivem Anwesenheitssignal gültigen Verifizierungsmodus zurück.

Die Verbindung zwischen der Basisstation FP und der Verarbeitungseinheit PC über die Telefonleitung 3 umfaßt Protokollwandlermittel 15 zur Datentransformation aus einem für die TK-Anlage bzw. Basisstation gültigen Protokoll in das für die Verarbeitungseinheit gültige Protokoll (CSTA) und umgekehrt. Über diese gelangt das Anwesenheitssignal einerseits zu einer Zeiterfassungsstufe 17, die die Zeit zwischen einem erstmaligen Anliegen des Anwesenheitssignals eines der Mobilteile und der Löschung dieses Signals als Anwesenheits-Zeitdauer des Nutzers des entsprechenden Mobilteils erfaßt. Andererseits gelangt das nutzerspezifische Anwesenheitssignal zu einer Funktionssteuerstufe 19, die nach vorgespeicherten Programmen bestimmte Steuerfunktionen bezüglich der TK-Anlage ausführt, was in der Figur durch einen zur Basisstation FP gerichteten Signalpfeil symbolisiert ist.

Die Zeiterfassungsstufe 17 ist einerseits mit einem Anwesenheitslistenspeicher 21, in dem eine Anwesenheitsliste der Nutzer der Mobilteile PP1 bis PP3 geführt wird, und andererseits mit einer Arbeitszeit-Abrechnungseinheit 23 verbunden. Die im Anwesenheitslistenspeicher 21 gespeicherte Anwesenheitsliste und die Ergebnisse der Arbeitszeitabrechnung können insbesondere (was in der Figur nicht dargestellt ist) über eine Anzeigeeinheit dargestellt und/oder einen Drucker als Hardcopy ausgegeben werden.

Mit der Funktionssteuerstufe 19 wird insbesondere die Rufweiterleitung von einem nicht anwesenden auf einen anwesenden Mitarbeiter bzw. deren Rücknahme gesteuert, sie kann aber auch andere arbeitsorganisatorische Abläufe steuern.

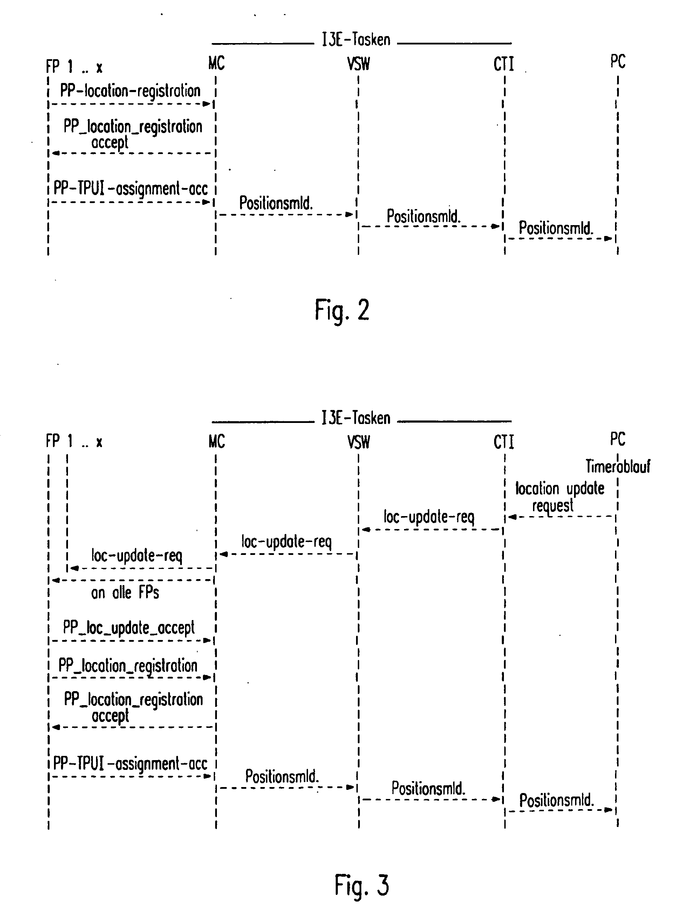

Die Figuren 2 und 3 zeigen Signalisierungsabläufe im Rahmen einer Anmeldung eines Mobilteiles bei der Basisstation bzw. im Rahmen eines nachgeschalteten Verifizierungsvorganges zur Feststellung der Fortdauer der Anwesenheit des Nutzers. Die Diagramme sind selbsterklärend, wenn neben den oben genannten Erklärungen für die Komponenten nach Fig. 1 berücksichtigt wird, daß das Kürzel CC eine Vermittlungs-Task, das Kürzel CTI eine CTI-Task, das Kürzel MC die Mobility Control des DECT-Systems und das Kürzel VSW die Vermittlungs-Software bezeichnet. Auf eine Beschreibung dieser Diagramme kann daher hier verzichtet werden.

### Bezugszeichenliste

- 1: Anordnung zur Anwesenheitserfassung
- 3: Telefonleitung
- 5: Empfangssignal-Verarbeitungsstufe
- 7: Anwesenheitssignal-Erzeugungseinrichtung
- 9: Anwesenheitssignal-Schaltstufe
- 11: Ablaufsteuerung
- 11a: Prüfprogrammspeicher
- 11b: Prüfprogramm-Taktgeber
- 13: Verifizierungs-Auswertungseinrichtung
- 13a: Prüfergebnisspeicher
- 13b: Entscheidungseinrichtung
- 15: Protokollwandlermittel
- 17: Zeiterfassungsstufe
- 19: Funktionssteuerstufe
- 21: Anwesenheitslistenspeicher
- 23: Arbeitszeit-Abrechnungseinheit
- CC: Vermittlungs-Task
- CTI: CTI-Task
- FP: Festteil (Fixed Part)
- MC: Mobility Control
- PC: Verarbeitungseinheit
- PP1 ... PP3: Mobilteil (Portable Part)
- VSW: Vermittlungs-Software

## Patentansprüche

1. Verfahren zur Erfassung der Anwesenheit von Personen in einem vorbestimmten Raumbereich über ein Telekommunikationsnetz,
**dadurch gekennzeichnet, dass**
ein Eintritt eines Mobilteiles (PP1 bis PP3) in den durch dessen Funkreichweite in Bezug auf ein Festteil (FP) einer drahtlosen Telekommunikationsanlage nach DECT-Standard bestimmten Raumbereich oder ein Einschalten des Mobilteiles innerhalb des Raumbereiches erfasst und als Anwesenheitssignal ausgewertet,
nach Gewinnung des Anwesenheitssignals der Verbleib bzw. das Eingeschaltetsein des Mobilteiles in dem Raumbereich durch Signalaustauschvorgänge in periodischen Zeitabständen zwischen Mobilteil und Festteil überprüft, wobei die Signalaustauschvorgänge als vom Festteil (FP) ausgehendes Polling ausgeführt werden und
das Anwesenheitssignal bei funktionierendem Signalaustausch jeweils aktualisiert oder bei nicht funktionierendem Signalaustausch gelöscht wird.

2. Verfahren nach Anspruch 1,
**dadurch gekennzeichnet, dass**
die Signalaustauschvorgänge in Zeitabständen von 15 min oder weniger, speziell von 5 min oder weniger, ausgeführt werden.

3. Verfahren nach einem der vorangehenden Ansprüche,
**dadurch gekennzeichnet, dass**
die Löschung des Anwesenheitssignals erst bei mehrmaliger Feststellung eines nicht funktionierenden Signalaustausches erfolgt.

4. Verfahren nach Anspruch 3,
**dadurch gekennzeichnet, dass**
bei einmaliger Feststellung eines nicht funktionierenden Signalaustauschs ein Überprüfungsschritt mit mindestens einem Signalaustauschvorgang, bevorzugt mehreren Signalaustauschvorgängen, mit verkürztem Zeitabstand gestartet wird.

5. Verfahren nach einem der vorangehenden Ansprüche,
**dadurch gekennzeichnet, dass**
die Zeitdauer zwischen der Erzeugung und der Löschung des Anwesenheitssignals als Anwesenheitszeit erfasst und insbesondere für eine Arbeitszeiterfassung ausgewertet wird.

6. Verfahren nach einem der vorangehenden Ansprüche,
**dadurch gekennzeichnet, dass**
das Anwesenheitssignal zur Steuerung von Funktionen der Telekommunikationsanlage, insbesondere einer automatischen internen oder externen Rufweiterleitung, genutzt wird.

7. Verfahren nach einem der vorangehenden Ansprüche,
**dadurch gekennzeichnet, dass**
das Anwesenheitssignal durch die Telekommunikationsanlage über eine CTI-Task an eine Verarbeitungseinheit (PC), insbesondere einen PC oder Server, zur weiteren Verarbeitung, insbesondere zur Erstellung/Aktualisierung einer Anwesenheitsliste und/oder zur Arbeitszeiterfassung und/oder zur rechnergestützten Funktionssteuerung der Telekommunikationsanlage, weitergeleitet wird.

8. Verfahren nach Anspruch 7,
**dadurch gekennzeichnet, dass**
die Kommunikation zwischen der Telekommunikationsanlage (FP, PP1 bis PP3) und der Verarbeitungseinheit (PC) über den B-Kanal eines digitalen Telefon-Festnetzes abläuft, wobei das CSTA-Protokoll in ein internes privates Protokoll oder umgekehrt umgewandelt wird.

9. Anordnung zur Durchführung des Verfahrens nach einem der vorangehenden Ansprüche,
mit einer drahtlosen Telekommunikationsanlage nach dem DECT-Standard, die ein Festteil (FP) und eine Mehrzahl von Mobilteilen (PP1 bis PP3) umfasst, wobei das Festteil
eine Anwesenheitssignal-Erzeugungseinrichtung (7) zur Erzeugung des Anwesenheitssignals,
eine Ablaufsteuerung (11) zur Steuerung der Signalaustauschvorgänge nach Gewinnung des Anwesenheitssignals zwischen dem Festteil und den Mobilteilen mit einem Taktgeber (11 b) zur periodischen Steuerung der Signalaustauschvorgänge als vom Festteil (FP) ausgehendes Polling,
eine Auswertungseinrichtung (13) zur Erfassung des Funktionierens oder Nicht-Funktionieren des Signalaustauschs und
eine mit der Auswertungseinrichtung verbundene Anwesenheitssignal-Löscheinrichtung (9) zum Löschen des Anwesenheitssignals im Ansprechen auf die Erfassung eines Nicht-Funktionieren des Signalaustausch aufweist.

10. Anordnung nach Anspruch 9,
**dadurch gekennzeichnet, dass**
die Auswertungseinrichtung (13) eine Prüfergebnis-Speichereinrichtung (13a) zur Speicherung von Ereignissen des Funktionierens oder Nicht-Funktionierens des Signalaustauschs und eine mit der Prüfergebnis-Speichereinrichtung verbundene Entscheidungseinrichtung (13b) zur Bewertung des Signalaustauschs als funktionierend oder nicht-funktionierend und zur Ausgabe eines entsprechenden Steuersignals an die Anwesenheitssignal-Löscheinrichtung aufweist.

11. Anordnung nach einem der Ansprüche 9 oder 10,
**dadurch gekennzeichnet, dass**
die Ablaufsteuerung (11) einen Prüfprogrammspeicher (11a) zur Speicherung mindestens eines Ablaufes der Signalaustauschvorgänge zwischen Festteil und Mobilteilen aufweist.

12. Anordnung nach einem der Ansprüche 9 bis 11,
**gekennzeichnet durch**
eine mit der Auswertungseinrichtung (13) eingangsseitig verbundene Verarbeitungseinheit (PC), insbesondere einen PC oder Server, zur weiteren Verarbeitung des Anwesenheitssignals, insbesondere zur Erstellung/Aktualisierung einer Anwesenheitsliste und/oder zur Arbeitszeiterfassung und/oder zur rechnergestützten Funktionssteuerung der Telekommunikationsanlage.

13. Anordnung nach Anspruch 12,
**dadurch gekennzeichnet, dass**
die Verarbeitungseinheit (PC) eine Zeiterfassungsstufe (17) zur Erfassung der Zeitdauer zwischen der Erzeugung und der Löschung des Anwesenheitssignals aufweist.

14. Anordnung nach Anspruch 12 oder 13,
**dadurch gekennzeichnet, dass**
die Verarbeitungseinheit (PC) eine Funktionssteuerstufe (19) zur Funktionssteuerung der Telekommunikationsanlage im Ansprechen auf die Erzeugung bzw. Löschung des Anwesenheitssignals aufweist.

15. Anordnung nach einem der Ansprüche 12 bis 14,
**dadurch gekennzeichnet, dass**
die Verarbeitungseinheit (PC) einen Anwesenheitslistenspeicher (21) zur Speicherung einer Anwesenheitsliste einer vorbestimmten Menge von Personen in dem Raumbereich im Ansprechen auf die Erzeugung bzw. Löschung des Anwesenheitssignals aufweist.

16. Anordnung nach einem der Ansprüche 12 bis 15,
**gekennzeichnet durch**
eine digitale Festnetz-Telefonverbindung (3) mit einem B-Kanal zwischen der Telekommunikationsanlage (FP, PP1 bis PP3) und der Verarbeitungseinheit (PC) sowie Protokollwandlermittel (15) zur Umwandlung des CSTA-Protokolls in ein internes privates Protokoll bzw. umgekehrt.

## Claims

1. A method for detecting the presence of persons in a predetermined spatial area via a telecommunication network,
**characterized in that**
the entry of a mobile part (PP1 to PP3) into the spatial area determined through the radio coverage of said mobile part in relation to a fixed part (FP) of a wireless telecommunications installation according to DECT standard or a switch-on of the mobile part within the spatial area is detected and evaluated as a presence signal,
after obtaining the presence signal, the continued stay or the continued being switched on of the mobile part within the spatial area is checked through signal-exchange processes between mobile part and fixed part at periodical intervals, the signal-exchange processes being carried out as a polling from the fixed part (FP), and
the presence signal is updated in each case, if the signal exchange works, or is deleted, if the signal exchange does not work.

2. The method of claim 1,
**characterized in that**
the signal-exchange processes are carried out at intervals of 15 minutes or less, in particular of 5 minutes or less.

3. The method of any of the preceding claims,
**characterized in that**
the presence signal will only be deleted after repeated determination that the signal exchange does not work.

4. The method of claim 3,
**characterized in that,**
if it is determined once that the signal exchange does not work, a verification step with at least one signal-exchange process, preferably several signal-exchange processes, is started with a shorter time interval.

5. The method of any of the preceding claims,
**characterized in that**
the space of time between generation and deletion of the presence signal is recorded as presence time and is evaluated in particular for recording a working time.

6. The method of any of the preceding claims,
**characterized in that**
the presence signal is used for controlling functions of the telecommunications installation, in particular an automatic internal or external forwarding of calls.

7. The method of any of the preceding claims,
**characterized in that**
the presence signal is forwarded by the telecommunications installation via a CTI task to a processing unit (PC), in particular a PC or server, for further processing, in particular for creating/updating a presence list and/or for recording a working time and/or for computer-assisted function control of the telecommunications installation.

8. The method of claim 7,
**characterized in that**
the communication between the telecommunications installation (FP, PP1 to PP3) and the processing unit (PC) is effected across the B-channel of a digital public switched telephone network, the CSTA protocol being converted into an internal private protocol or vice versa.

9. An arrangement for carrying out the method of any of the preceding claims, including a wireless telecommunications installation according to DECT standard, comprising a fixed part (FP) and a plurality of mobile parts (PP1 to PP3), the fixed part including
a presence-signal generation device (7) for generating the presence signal,
a sequence controller (11) for controlling the signal-exchange processes, after obtaining the presence signal, between the fixed part and the mobile parts, with a clock generator (11 b) for periodically controlling the signal-exchange processes as a polling from the fixed part (FP),
an evaluation device (13) for detecting whether the signal exchange works or does not work, and a presence-signal deletion device (9) for deleting the presence signal as a response to detecting that the signal exchange does not work.

10. The arrangement of claim 9,
**characterized in that**
the evaluation device (13) includes a test-result storage device (13a) for storing events of working or non-working of the signal exchange and a decision device (13b) for evaluating the signal exchange as working or not working and for outputting a corresponding control signal to the presence-signal deletion device.

11. The arrangement of any of claims 9 or 10,
**characterized in that**
the sequence controller (11) includes a test-program storage (11a) for storing at least one sequence of the signal-exchange processes between fixed part and mobile parts.

12. The arrangement of any of claims 9 to 11,
**characterized by**
a processing unit (PC), in particular a PC or server, connected on the input side with the evaluation device (13) for further processing the presence signal, in particular for creating/updating a presence list and/or for recording a working time and/or for computer-assisted function control of the telecommunications installation.

13. The arrangement of claim 12,
**characterized in that**
the processing unit (PC) includes a time-detection stage (17) for detecting the space of time between generation and deletion of the presence signal.

14. The arrangement of claim 12 or 13,
**characterized in that**
the processing unit (PC) includes a function-control stage (19) for controlling the function of the telecommunications installation in response to the generation or deletion of the presence signal.

15. The arrangement of any of claims 12 to 14,
**characterized in that**
the processing unit (PC) includes a presence-list storage (21) for storing a presence list of a predetermined set of persons present in the spatial area, in response to the generation or deletion of the presence signal.

16. The arrangement of any of claims 12 to 15,
**characterized by**
a digital telephone connection of the public switched telephone network (3) with a B-channel between the telecommunications installation (FP, PP1 to PP3) and the processing unit (PC) as well as protocol-converter means (15) for converting the CSTA protocol into an internal private protocol or vice versa.

## Revendications

1. Procédé pour saisir la présence de personnes dans une zone spatiale prédéfinie au moyen d'un réseau de télécommunication,
**caractérisé en ce que**
l'entrée d'une partie mobile (PP1 à PP3) dans la zone spatiale déterminée par la portée radio de dite partie mobile par rapport à une partie fixe (FP) d'une installation de télécommunication sans fil selon la norme DECT ou une mise en marche de la partie mobile à l'intérieur de la zone spatiale est saisie et évaluée comme signal de présence,
après obtenir le signal de présence, la permanence du séjour ou de l'état en marche de la partie mobile à l'intérieur de la zone spatiale est vérifiée via des processus d'échange de signaux entre la partie mobile et la partie fixe à des intervalles périodiques, les processus d'échange de signaux étant effectués comme un polling émanant de la partie fixe (FP), et
le signal de présence est actualisé à chaque fois, si l'échange de signaux fonctionne, ou est effacé, si l'échange de signaux ne fonctionne pas.

2. Procédé selon la revendication 1,
**caractérisé en ce que**
les processus d'échange de signaux sont effectués à des intervalles de 15 minutes ou moins, en particulier de 5 minutes ou moins.

3. Procédé selon l'une quelconque des revendications précédentes,
**caractérisé en ce que**
le signal de présence ne sera effacé qu'après avoir déterminé plusieurs fois que l'échange de signaux ne fonctionne pas.

4. Procédé selon la revendication 3,
**caractérisé en ce que,**
s'il est déterminé une fois que l'échange de signaux ne fonctionne pas, un pas de vérification avec au moins un processus d'échange de signaux, préférablement plusieurs processus d'échange de signaux, est lancé avec un intervalle de temps plus court.

5. Procédé selon l'une quelconque des revendications précédentes,
**caractérisé en ce que**
l'espace de temps entre la génération et l'effacement du signal de présence est saisi comme temps de présence et est évalué en particulier pour la saisie d'un temps de travail.

6. Procédé selon l'une quelconque des revendications précédentes,
**caractérisé en ce que**
le signal de présence est utilisé pour contrôler des fonctions de l'installation de télécommunication, en particulier un transfert d'appels interne ou externe automatique.

7. Procédé selon l'une quelconque des revendications précédentes,
**caractérisé en ce que**
le signal de présence est réacheminé par l'installation de télécommunication au moyen d'une tâche CTI, vers une unité de traitement (PC), en particulier un ordinateur personnel ou un serveur, pour un traitement ultérieur, en particulier pour créer/actualisér une liste de présence et/ou pour saisir un temps de travail et/ou pour un contrôle de fonctionnement assisté par ordinateur, de l'installation de télécommunication.

8. Procédé selon la revendication 7,
**caractérisé en ce que**
la communication entre l'installation de télécommunication (FP, PP1 à PP3) et l'unité de traitement (PC) est effectuée via le canal B d'un réseau fixe digital, le protocole CSTA étant converti en un protocole interne privé ou vice versa.

9. Arrangement pour effectuer le procédé selon l'une quelconque des revendications précédentes,
avec une installation de télécommunication sans fil selon la norme DECT, comprenant une partie fixe (FP) et une pluralité de parties mobiles (PP1 à PP3), la partie fixe comprenant
un dispositif de génération du signal de présence (7) pour générer le signal de présence,
une commande séquentielle (11) pour contrôler le processus d'échange de signaux, après obtenir le signal de présence, entre la partie fixe et les parties mobiles, avec un générateur d'horloge (11 b) pour contrôler périodiquement le processus d'échange de signaux comme un polling émanant de la partie fixe (FP),
un dispositif d'évaluation (13) pour saisir si l'échange de signaux fonctionne ou ne fonctionne pas, et un dispositif d'effacement du signal de présence en réponse à avoir saisi que l'échange de signaux ne fonctionne pas.

10. Arrangement selon la revendication 9,
**caractérisé en ce que**
le dispositif d'évaluation (13) comprend un dispositif de mise en mémoire du résultat de la vérification (13a) pour mémoriser des évènements de fonctionnement ou de non-fonctionnement de l'échange de signaux et un dispositif de décision (13b) pour évaluer l'échange de signaux comme fonctionnant ou comme non-fonctionnant et pour sortir un signal de contrôle correspondant, au dispositif d'effacement du signal de présence.

11. Arrangement selon l'une quelconque des revendications 9 ou 10,
**caractérisé en ce que**
la commande séquentielle (11) comprend une mémoire de programme de test (11a) pour mémoriser au moins une séquence du processus d'échange de signaux entre la partie fixe et les parties mobiles.

12. Arrangement selon l'une quelconque des revendications 9 à 11,
**caractérisé par**
une unité de traitement (PC), en particulier un ordinateur personnel ou un serveur, reliée du côté d'entrée avec le dispositif d'évaluation (13) pour le traitement ultérieur du signal de présence, en particulier pour créer/actualiser une liste de présence et/ou pour saisir un temps de travail et/ou pour un contrôle de fonctionnement assisté par ordinateur, de l'installation de télécommunication.

13. Arrangement selon la revendication 12,
**caractérisé en ce que**
l'unité de traitement (PC) comprend un niveau de saisie de temps (17) pour saisir l'espace de temps entre la génération et l'effacement du signal de présence.

14. Arrangement selon la revendication 12 ou 13,
**caractérisé en ce que**
l'unité de traitement (PC) comprend un niveau de contrôle de fonction (19) for contrôler la fonction de l'installation de télécommunication en réponse à la génération ou à l'effacement du signal de présence.

15. Arrangement selon l'une quelconque des revendications 12 à 14,
**caractérisé en ce que**
l'unité de traitement (PC) comprend une mémoire de listes de présence (21) pour mémoriser une liste de présence d'un ensemble prédéfini de personnes se trouvant dans la zone spatiale, en réponse à la génération ou l'effacement du signal de présence.

16. Arrangement selon l'une quelconque des revendications 12 à 15,
**caractérisé par**
une liaison téléphonique digitale du réseau fixe (3) avec un canal B entre l'installation de télécommunication (FP, PP1 à PP3) et l'unité de traitement (PC) ainsi que des moyens de conversion de protocole (15) pour convertir le protocole CSTA en un protocole interne privé ou vice versa.
